# EUROPEAN PATENT APPLICATION

(11) **EP 2 738 702 A1**
(43) Date of publication of application: **04.06.2014**
(21) Application number: 12863107.4
(22) Date of filing: 31.12.2012
(51) Int. Cl.: G06F 19/00

(54) **DISPATCHING SYSTEM AND METHOD**

(30) Priority: 30.12.2011 CN 201110456671
(71) Applicant: Peking University Founder Group Co., Ltd, Haidian District Beijing 100871 (CN); Beijing Founder Electronics Co., Ltd., Haidian District, Beijing 100085 (CN)
(72) Inventor: ZHANG, Guangliang, - (CN)
(74) Representative: Cohausz & Florack
(86) International application number: PCT/CN2012/088105
(87) International publication number: WO 2013/097827

(57) **Abstract**

Provided are a dispatching system and method applied to journalist dispatching. The dispatching system comprises a map positioning device (101) for positioning all journalists, marking the position of each journalist and the position where a news event occurs, and calculating the shortest time required for each journalist to arrive at the position where the news event occurs; a dispatching device (102) for determining a journalist for whom the shortest time required to arrive at the position where the news event occurs is the shortest among the journalists in an idle state in accordance with the shortest time required for each journalist and state information about each journalist, and sending a dispatching task and clues to the communication device (103) of the journalist; and a communication device (103) for feeding back the state information about the journalist to the dispatching device (102) and receiving the dispatching task and the clues.

## Description

### Field of the Invention

The present invention relates to a dispatching system and method, and particularly relates to a dispatching system and method applied to journalist dispatching.

### Background of the Invention

At the moment, dispatching of news reporters in newspaper industry is primarily completed by city desk director through manually dispatching. The principal dispatching procedure is: first of all, the city desk director gets to know about clues of a breaking news event by means of various channels for information; the city desk director then learns the current position and working state of each journalist over the telephone; further, the breaking news event would be assigned to one idle journalist; furthermore, the clues of the breaking news event would be sent to the journalist; finally, the journalist would make an interview in accordance with the clues, and feed back to the city desk director after the interview is completed.

During the manually dispatching procedure by the city desk director, the workload for the city desk director is heavy, and the journalist dispatching to make an interview on a breaking news event is not accurate, and the interview efficiency of a breaking news event interview is decreased.

### Summary of the Invention

The present invention provides a dispatching system and method used for achieving automated journalist dispatching and increasing interview efficiency.

To achieve the above purposes, the present invention employs the following technical solutions:

A dispatching system comprises a map positioning device, a dispatching device and a communication device; wherein the map positioning device is used for positioning the positions of all the journalists, marking the position of each journalist and the position where a news event occurs, and calculating the shortest time required for each journalist to arrive at the position where the news event occurs; the dispatching device is used for determining a journalist for whom the shortest time required to arrive at the position where the news event occurs is the shortest among the journalists in an idle state in accordance with the shortest time required for each journalist to arrive at the position where the news event occurs and state information about each journalist, and sending a dispatching task and the clues about the news event to the communication device of the journalist; and the communication device is used for feeding back the state information about the journalist to the dispatching device and receiving the dispatching task and the clues about the news event sent by the dispatching device.

Preferably, the dispatching device is specifically used for:
sending a dispatching request to the communication device of one journalist in sequence in an order of the shortest time required for each journalist to arrive at the position where the news event occurs from the shortest to the longest, and determining whether to send the dispatching task and the clues about the news event to the journalist in accordance with the state information fed back by the communication device of the journalist; wherein
if the state information fed back by the communication device of the journalist indicates that the journalist is in an idle state, sending the dispatching task and the clues about the news event to the journalist; and
if the state information fed back by the communication device of the journalist indicates that the journalist is in an busy state or no state information is fed back by the communication device of the journalist, sending the dispatching request sequentially in accordance with the above order to the communication device of the next journalist until a journalist for whom the shortest time required to arrive at the position where the news event occurs is the shortest among the journalists in an idle state is determined, and sending the dispatching task and the clues about the news event to the communication device of the journalist.

Preferably, the map positioning device comprises a positioning unit, a map unit and a calculation unit; wherein
the positioning unit is used for positioning the positions of all the journalists;
the map unit is used for marking the position of each journalist and the position where the news event occurs on the map; and
the calculation unit is used for calculating the shortest time required for each journalist to arrive at the position where the news event occurs.

Preferably, the dispatching system further comprises the news clue collection device, which is used for acquiring clues about a news event, the clues of the news event including the title, the contents, the position where the news event occurs and the contacts of the news event.

Preferably, the dispatching system further comprises a display device, which is used for displaying the output results sent thereto from the map positioning device and/or the dispatching device.

Preferably, the output results sent to the display device from the map positioning device includes the position of each journalist, the position where the news event occurs and the shortest time required for each journalist to arrive at the position where the news event occurs.

The output results sent to the display device from the dispatching device includes the name of the journalist that accepts the dispatching task and the clues about the news event sent to the communication device of the journalist.

A dispatching method comprises positioning the positions of all the journalists and marking the position of each journalist and the position where a news event occurs; calculating the shortest time required for each journalist to arrive at the position where the news event occurs; and sending a dispatching task and the clues about the news event to a journalist who is in an idle state and for whom the shortest time required to arrive at the position where the news event occurs is the shortest in accordance with the shortest time required for each journalist to arrive at the position where the news event occurs and the state information of each journalist.

Preferably, before positioning all the journalists, the method further comprises:
acquiring clues about the news event; the clues of the news event including the title, the contents, the position where the news event occurs and the contacts of the news event.

Preferably, the method further comprises:
displaying the position of each journalist, the position where the news event occurs, the shortest time required for each journalist to arrive at the position where the news event occurs, the name of the journalist that accepts the dispatching task and the clues about the news event sent to the journalist.

Preferably, sending a dispatching task and the clues about the news event to the journalist who is in an idle state and for whom the shortest time required to arrive at the position where the news event occurs is the shortest in accordance with the shortest time required for each journalist to arrive at the position where the news event occurs and the state information of each journalist specifically comprises:
sending a dispatching request to one journalist in sequence in an order of the shortest time required for each journalist to arrive at the position where the news event occurs from the shortest and the longest; and
determining whether to send the dispatching task and the clues about the news event to the journalist in accordance with the state information fed back by the journalist; wherein
if the state information fed back by the journalist indicates that the journalist is in an idle state, sending the dispatching task and the clues about the news event to the journalist;
if the state information fed back by the journalist indicates that the journalist is in an busy state or no state information is fed back by the journalist, sending the dispatching request sequentially in accordance with the above order to the next journalist until the journalist for whom the shortest time required to arrive at the position where the news event occurs is the shortest among the journalists in an idle state is determined, and sending the dispatching task and the clues about the news event to the journalist.

The dispatching system and method provided in the present invention position the positions of all the journalists after acquiring clues about the news event, mark the position where the news event occurs and the position of each journalist, calculate the shortest time required for each journalist to arrive at the position where the news event occurs, and send a dispatching task to the communication device of the journalist who is in an idle state and spends the shortest time (i.e., the journalist for whom the shortest time required to arrive at the position where the news event occurs is the shortest among the journalists in an idle state), thereby achieving automated journalist dispatching, and the accuracy for dispatching journalists to make an interview on a breaking news event is increased, and the interview efficiency is improved.

### Brief description of the drawings

In order to illustrate more clearly the embodiments of the present invention or the technical solutions of the prior art, a brief introduction is made below to the drawings needed to be used in the description of embodiments or the prior art. Apparently, the drawings in the following description are merely some embodiments of the present invention. Those of ordinary skill in the art can also obtain other drawings based on these drawings without creative efforts.
Figure 1 is a schematic structural view of a dispatching system provided in an embodiment of the present invention;
Figure 2 is a schematic structural view of the map positioning device shown in Figure 1;
Figure 3 is a schematic structural view of another dispatching system provided in an embodiment of the present invention;
Figure 4 is a schematic structural view of another dispatching system provided in an embodiment of the present invention;
Figure 5 is a schematic view of a dispatching method provided in an embodiment of the present invention; and
Figure 6 is a schematic view of another dispatching method provided in an embodiment of the present invention.

### Detailed Description of Embodiments

The technical solutions in the embodiments of the present invention will be clearly and fully described below in conjunction with the figures in the embodiments of the present invention. Apparently, the embodiments to be described are only a part of the embodiments of the present invention but not the whole embodiments. Other embodiments acquired based on the embodiments of the present invention by those of ordinary skill in the art without creative work still fall within the scope of the present invention.

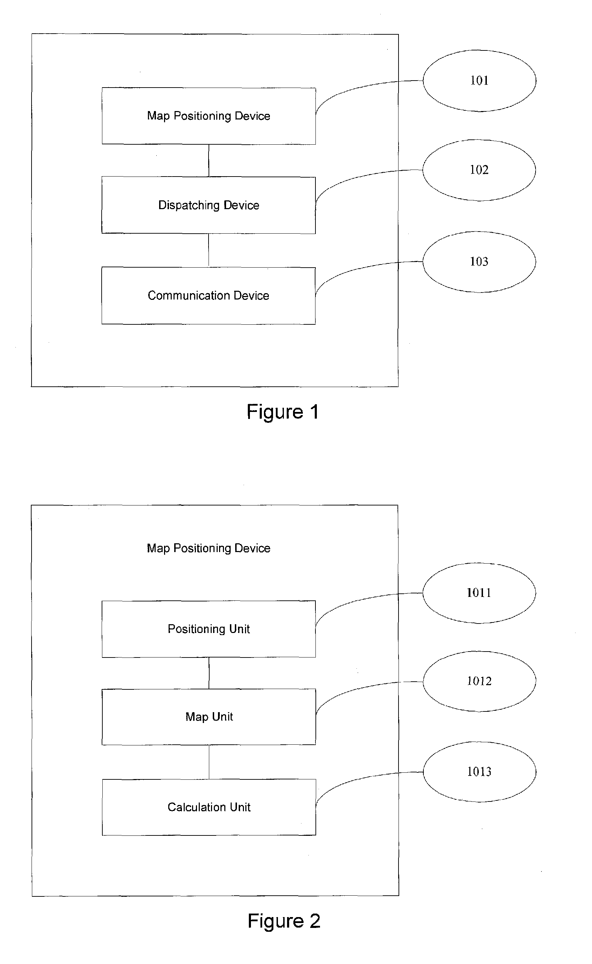

A dispatching system is provided in the embodiment of the invention, as shown in Figure 1, comprising a map positioning device 101, a dispatching device 102 and a communication device 103.

The map positioning device 101 is used for positioning the positions of all the journalists, marking the position of each journalist and the position where the news event occurs, calculating the shortest time required for each journalist to arrive at the position where the news event occurs, and sending the shortest time required for each journalist to arrive at the position where the news event occurs to the dispatching device.

Specifically, after acquiring clues about a news event, the map positioning device will position and mark the positions of all the journalists, mark the position where the news event occurs, and calculate the shortest time required for each journalist to arrive at the position where the news event occurs, the shortest time meaning the time spent by each journalist to arrive at the position where the news event occurs via an optimal path.

The map positioning device 101 comprises a positioning unit 1011, a map unit 1012 and a calculation unit 1013, as shown in Figure 2.

The positioning unit 1011 is used for positioning the positions of all the journalists and sending the positions of all the journalists to the map unit 1012.

Specifically, the positions of all the journalists will be positioned through the positioning unit 1011 after the clues about the news event are acquired. The positioning unit may include a smartphone or a computer integrated with GPS satellite positioning function. The smartphone integrated with GPS satellite positioning function can be implemented by installing an existing mobile phone positioning software in an ordinary smartphone. For example, the mobile phone carried by each journalist may be positioned when the number of the mobile phone carried by each journalist is input to the smartphone integrated with GPS satellite positioning function, thereby the positions of all the journalists can be positioned.

The map unit 1012 is used for marking the position of each journalist and the position where the new event occurs on the map in accordance with the positions of all the journalists sent by the positioning unit 1011, and sending the map marked with the position of each journalist and the position where the news event occurs to the calculation unit 1013.

Specifically, the map unit 1012 will mark the position of each journalist and the position where the news event occurs on the map after the positions of all the journalists are positioned by the positioning unit 1011. The map unit may be realized by a smartphone or a computer integrated with a network map searching module and a corresponding API (Application Programming Interface). The smartphone or the computer marks the position of each journalist and the position where the news event occurs sent by the positioning unit on the network map searching module through calling API corresponding to the network map searching module. The network map searching module may be realized by available Baidu maps, Google maps or Sogou maps, etc.

The calculation unit 1013 is used for calculating the shortest time required for each journalist to arrive at the position where the news event occurs in accordance with the map that is marked with the position of each journalist and the position where the news event occurs and is sent by the map unit 1012, sending the shortest time for each journalist to arrive at the position where the news event occurs to the dispatching device 102. The calculation unit may be realized by a smartphone or a computer integrated with calculation functions.

Specifically, the calculation unit 1013 will calculate the shortest time required for each journalist to arrive at the position where the news event occurs in accordance with the map marked with the position of each journalist and the position where the news event occurs, after the position of each journalist and the position where the news event occurs are marked on the map by the map unit 1012.

It should be noted that, as the positioning unit 1011, the map unit 1012 and the calculation unit 1013 in the map positioning device 101, three smartphones or computers may be used, respectively, or one smartphone or one computer may be used, as long as a GPS satellite positioning function, a network map searching module and a corresponding API and a calculation function are integrated.

The dispatching device 102 is used for determining which journalist can arrive at the position where the news event occurs within the shortest time (i.e. the journalist spending the shortest time) among the journalists in an idle state in accordance with the shortest time required for each journalist to arrive at the position where the news event occurs sent by the calculation unit 1013 in the map positioning device 101 and state information about each journalist, and sending a dispatching task (i.e., dispatching the journalist to make an interview about the news event) and clues about the news event, such as the title, the contents, the position where the news event occurs and the contacts, etc. of the news event, to the communication device of the journalist. The dispatching device may be realized by an available smartphone or a computer.

Specifically, the dispatching device 102 sends a dispatching request (the dispatching request may employ the way of telephone calls, short messages, or pop-up reminders to remind the journalist of a new interview task) to the communication device of one journalist in sequence in an order of the shortest time required for each journalist to arrive at the position where the news event occurs from the shortest to the longest, and determines whether to send the dispatching task and the clues about the news event to the journalist in accordance with the state information fed back by the communication device of the journalist; if the state information fed back by the communication device of the journalist indicates that the journalist is in an idle state, the dispatching task and the clues about the news event would be sent to the journalist; if the state information fed back by the communication device of the journalist indicates that the journalist is in a busy state or no state information is fed back by the communication device of the journalist, the dispatching request would be sent sequentially in accordance with the above order to the communication device of the next journalist until a journalist for whom the shortest time required to arrive at the position where the news event occurs is the shortest among the journalists in an idle state is determined, and the dispatching task and the clues about the news event would be sent to the communication device of the journalist.

For example, the map positioning device 101 calculates the shortest time required for Journalist A, Journalist B and Journalist C to arrive at the position where the news event occurs are 10 minutes, 15 minutes and 20 minutes, respectively. The dispatching device 102 finds out that the shortest time required for Journalist A to arrive at the position where the news event occurs is the shortest in accordance with the shortest time required for each journalist to arrive at the position where the news event F occurs calculated by the map positioning device 101. First of all, a dispatching request is sent to the communication device 103 of Journalist A by the dispatching device 102, and Journalist A receives the dispatching request through the communication device 103. Journalist A sends a piece of state information indicating that he/she is in a busy state to the dispatching device 102 through the communication device 103 so as to refuse the dispatching request, in the case that Journalist A is in a busy state at that moment. The dispatching request would be sent in sequence to Journalist B, who spends the second shortest time to arrive at the position where the news event F occurs, after the dispatching device 102 receives the information indicating a busy state sent from Journalist A. Or, if Journalist A replies nothing to the dispatching request of the dispatching device 102 and the dispatching device 102 receives no feedback information from Journalist A after a time threshold, Journalist A is then determined by the dispatching device 102 to be in a busy state and the dispatching request would be sent by the dispatching device 102 to Journalist B, who spends the second shortest time to arrive at the position where the news event F occurs.

If Journalist A is in an idle state, information indicating that Journalist A is in an idle state would be sent to the dispatching device 102 through the communication device 103 so as to accept the dispatching request. The clues of the news event F would be sent to the communication device of Journalist A after the dispatching device 102 receives the information indicating the idle state sent from Journalist A.

What needs to be explained is that the above time threshold may be a time value set in the dispatching device, which for instance, may be 5 minutes or 8 minutes, etc. This time threshold is not limited in this present invention.

The communication device 103 is used for feeding back the state information about the journalist (who carries the communication device 103) to the dispatching device, and receiving the dispatching task and the clues about the news event sent by the dispatching device. The communication device may be realized by an available smartphone. Feeding back the state information of the journalist by the communication device to the dispatching device may be achieved by way of telephone calls, short messages, or pop-up reminders.

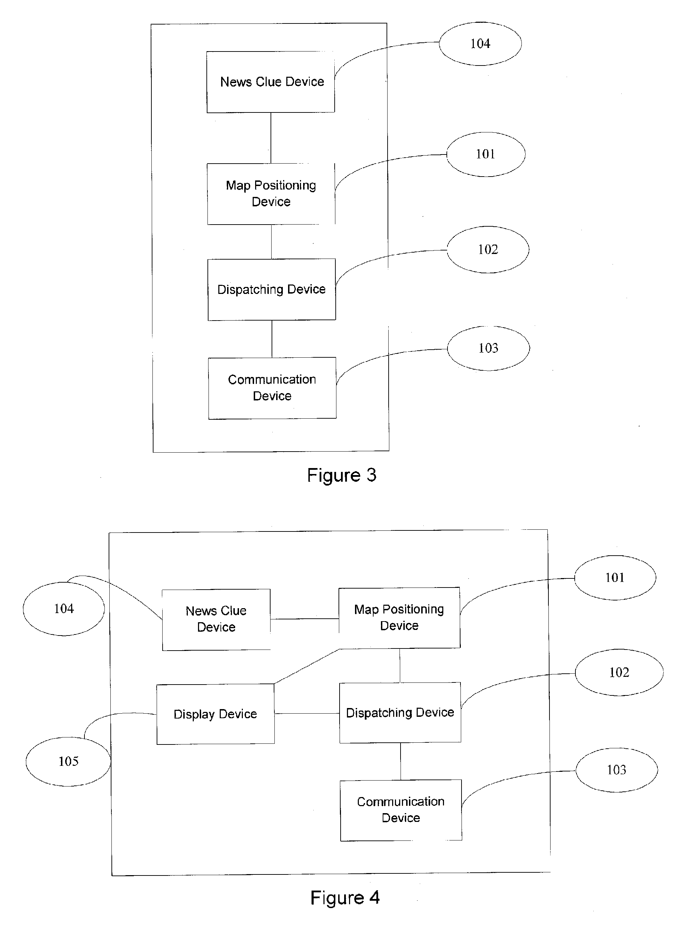

As shown in Figure 3, the dispatching system further comprises:
a news clue collection device 104, which is used for acquiring clues about a news event, sending the acquired clues about the news event to the dispatching device and sending the position where the news event occurs in the acquired clues about the news event to the map positioning device.

Specifically, the news clue collection device 104 may acquire the clues about the news event by means of various channels, the clues including the title, the contents, the position where the news event occurs and the contacts, etc. of the news event. The above channels may be a short message platform, a telephone, a website, etc., which are not limited in this present invention.

As shown in Figure 4, the dispatching system further comprises:
a display device 105, which is connected with the map positioning device and/or the dispatching device, respectively, and is used for displaying the output results sent thereto from the map positioning device and/or the dispatching device.

Wherein the output results sent to the display device from the map positioning device are the position of each journalist, the position where the news event occurs and the shortest time required for each journalist to arrive at the position where the news event occurs. The output results sent to the display device from the dispatching device are the name of the journalist that accepts the dispatching task and the clues about the news event sent to the communication device of the journalist.

Therefore the output results of the map positioning device 101 may be displayed by the display device 105, i.e., the position of each journalist, the position where the news event occurs and the shortest time for each journalist to arrive at the position where the news event occurs are displayed. The output results of the dispatching device 102 may also be displayed by the display device 105, i.e., the name of the journalist that accepts the dispatching task and clues about the news event sent to the communication device of the journalist, such as the title, the contents, the position where the news event occurs and the contacts, etc. are displayed.

In the above dispatching system provided in the embodiment of this present invention, after the clues about the news event are acquired by the news clue collection device, the map positioning device will position the positions of all the journalists, mark the position where the news event occurs and the position of each journalist and calculate the shortest time required for each journalist to arrive at the position where the news event occurs; and the dispatching device sends a dispatching task and the clues about the news event to the communication device of the journalist who is in an idle state and spends the shortest time (i.e., the journalist for whom the shortest time required to arrive at the position where the news event occurs is the shortest among the journalists in an idle state), so that journalist dispatching is automated, and the accuracy of dispatching journalists to make an interview on a breaking news event is improved, and the interview efficiency is increased.

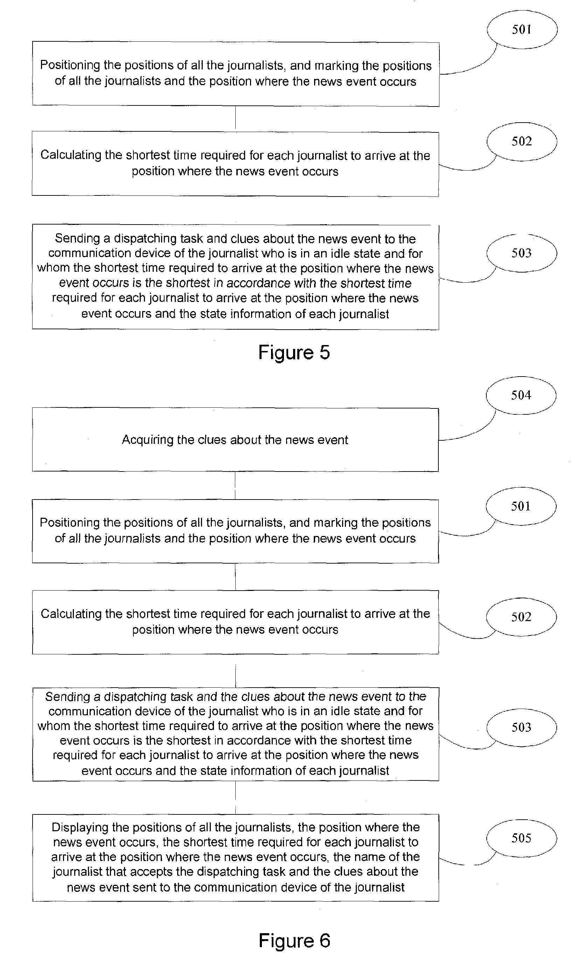

A dispatching method is also provided in the embodiment of the present invention, as shown in Figure 5, which comprises:
step 501 of positioning the positions of all the journalists and marking the position of each journalist and the position where a news event occurs.

Specifically, positioning and marking the position of each journalist and marking the position where the news event occurs, after the clues about the news event are acquired.
step 502 of calculating the shortest time required for each journalist to arrive at the position where the news event occurs.

Specifically, calculating the shortest time required for each journalist to arrive at the position where the news event occurs, the shortest time meaning the time spent by each journalist to arrive at the position where the news event occurs via an optimal path.
step 503 of sending the dispatching task and the clues about the news event, such as the title, the contents, the position where the news event occurs and the contacts, etc. of the news event, to the communication device of the journalist who is in an idle state and for whom the shortest time required to arriving at the position where the news event occurs is the shortest in accordance with the shortest time required for each journalist to arrive at the position where the news event occurs and the state information of each journalist.

Specifically, sending a dispatching request to the communication device of one journalist in sequence in an order of the shortest time required for each journalist to arrive at the position where the news event occurs from the shortest to the longest, and determining whether to send the dispatching task and the clues about the news event to the journalist in accordance with the state information fed back by the communication device of the journalist.

If the state information fed back by the communication device of the journalist indicates that the journalist is in an idle state, sending the dispatching task and the clues about the news event to the journalist.

If the state information fed back by the communication device of the journalist indicates that the journalist is in an busy state or no state information is fed back by the communication device, sending the dispatching request sequentially in accordance with the above order to the communication device of the next journalist until a journalist for whom the shortest time required to arrive at the position where the news event occurs is the shortest among the journalists in an idle state is determined, and sending the dispatching task and the clues about the news event to the communication device of the journalist.

As shown in Figure 6, before the step 501, the dispatching method further comprises:
step 504 of acquiring the clues of the news event.

Specifically, the clues about the news event may be acquired through various channels (such as the title, the contents, the position where the news event occurs and the contacts, etc. of the news event). The above various channels may be a short message platform, a telephone, a website, etc., which are not limited in this present invention.

After the Step 503, the method further comprises:
step 505 of displaying the position of each journalist, the position where the news event occurs and the shortest time required for each journalist to arrive at the position where the news event occurs, the name of the journalist that accepts the dispatching task and the clues about the news event sent to the journalist, such as the title, the contents, the position where the news event occurs and the contacts, etc. of the news event.

In the above dispatching method provided in the embodiment of the present invention, after clues about the news event are acquired, the positions of all the journalists are positioned, the position where the news event occurs and the position of each journalist are marked, the shortest time required for each journalist to arrive at the position where the news event occurs is calculated, and a dispatching task and the clues about the news event are sent to the communication device of the journalist who is in an idle state and spends the shortest time (i.e., the journalist for whom the shortest time required to arrive at the position where the news event occurs is the shortest among the journalists in an idle state), so that journalist dispatching is automated, the accuracy for dispatching journalists to make an interview on a breaking news event is improved, and the interview efficiency is increased.

The above descriptions are merely specific embodiments of the present invention; however, the scope of the present invention is not limited thereto. Any changes or substitutes that may easily be conceived within the technical scope disclosed in the present invention by any technician who is familiar with the technology field should be covered within the scope of the present invention. Therefore, it is intended that the scope of the present invention be defined by the scope of the claims.

## Claims

1. A dispatching system, **characterized in that**, comprising: a map positioning device, a dispatching device and a communication device; wherein
the map positioning device is used for positioning the positions of all the journalists, marking the position of each journalist and the position where a news event occurs, and calculating the shortest time required for each journalist to arrive at the position where the news event occurs;
the dispatching device is used for determining a journalist for whom the shortest time required to arrive at the position where the news event occurs is the shortest among the journalists in an idle state in accordance with the shortest time required for each journalist to arrive at the position where the news event occurs and state information about each journalist, and sending a dispatching task and the clues about the news event to the communication device of the journalist; and
the communication device is used for feeding back the state information about the journalist to the dispatching device and receiving the dispatching task and the clues about the news event sent by the dispatching device.

2. The dispatching system of claim 1, **characterized in that**,
the dispatching device is used for:
sending a dispatching request to the communication device of one journalist in sequence in an order of the shortest time required for each journalist to arrive at the position where the news event occurs from the shortest to the longest, and determining whether to send the dispatching task and the clues about the news event to the journalist in accordance with the state information fed back by the communication device of the journalist; wherein
if the state information fed back by the communication device of the journalist indicates that the journalist is in an idle state, sending the dispatching task and the clues about the news event to the journalist; and
if the state information fed back by the communication device of the journalist indicates that the journalist is in a busy state or no state information is fed back by the communication device of the journalist, sending the dispatching request sequentially in accordance with the above order to the communication device of the next journalist until a journalist for whom the shortest time required to arrive at the position where the news event occurs is the shortest among the journalists in idle state is determined, and sending the dispatching task and the clues about the news event to the communication device of the journalist.

3. The dispatching system of claim 1 or 2, **characterized in that**,
the map positioning device comprises a positioning unit, a map unit and a calculation unit; wherein
the positioning unit is used for positioning the positions of all the journalists;
the map unit is used for marking the position of each journalist and the position where the news event occurs on the map; and
the calculation unit is used for calculating the shortest time required for each journalist to arrive at the position where the news event occurs.

4. The dispatching system of claim 1 or 2, **characterized in that**, further comprising:
a news clue collection device, which is used for acquiring clues about the news event, the clues of the news event including the title, the contents, the position where the news event occurs and the contacts of the news event.

5. The dispatching system of claim 1 or 2, **characterized in that**, further comprising:
a display device, which is used for displaying the output results sent thereto from the map positioning device and/or the dispatching device.

6. The dispatching system of claim 5, **characterized in that**,
the output results sent to the display device from the map positioning device includes the position of each journalist, the position where the news event occurs and the shortest time required for each journalist to arrive at the position where the news event occurs; and
the output results sent to the display device from the dispatching device includes the name of the journalist that accepts the dispatching task and the clues about the news event sent to the communication device of the journalist.

7. A dispatching method, **characterized in that**, comprising:
positioning the positions of all the journalists and marking the position of each journalist and the position where a news event occurs;
calculating the shortest time required for each journalist to arrive at the position where the news event occurs; and
sending a dispatching task and the clues about the news event to a journalist who is in an idle state and for whom the shortest time required to arrive at the position where the news event occurs is the shortest in accordance with the shortest time required for each journalist to arrive at the position where the news event occurs and the state information of each journalist.

8. The dispatching method of claim 7, **characterized in that**, before positioning the positions of all the journalists, further comprising:
acquiring clues about the news event; the clues of the news event including the title, the contents, the position where the news event occurs and the contacts of the news event.

9. The dispatching method of claim 7 or 8, **characterized in that**, further comprising:
displaying the position of each journalist, the position where the news event occurs, the shortest time required for each journalist to arrive at the position where the news event occurs, the name of the journalist that accepts the dispatching task and the clues about the news event sent to the journalist.

10. The dispatching method of claim 7, **characterized in that**, sending a dispatching task and the clues about the news event to the journalist who is in an idle state and for whom the shortest time required to arrive at the position where the news event occurs is the shortest in accordance with the shortest time required for each journalist to arrive at the position where the news event occurs and the state information of each journalist specifically comprises:
sending a dispatching request to one journalist in sequence in an order of the shortest time required for each journalist to arrive at the position where the news event occurs from the shortest to the longest; and
determining whether to send the dispatching task and the clues about the news event to the journalist in accordance with the state information fed back by the journalist; wherein
if the state information fed back by the journalist indicates that the journalist is in an idle state, sending the dispatching task and the clues about the news event to the journalist; and
if the state information fed back by the journalist indicates that the journalist is in a busy state or no state information is fed back by the journalist, sending the dispatching request sequentially in accordance with the above order to the next journalist until the journalist for whom the shortest time required to arrive at the position where the news event occurs is the shortest among the journalists in an idle state is determined, and sending the dispatching task and the clues about the news event to the journalist.
